# EUROPEAN PATENT SPECIFICATION

(11) **EP 1 390 010 B1**
(45) Date of publication and mention of the grant of the patent: **11.04.2007**
(21) Application number: 02769173.2
(22) Date of filing: 29.04.2002
(51) Int. Cl.: A01N 37/02, A61K 8/36, A61K 8/33, A61Q 5/02

(54) **ALCOHOL-FREE LIQUID CONCENTRATE FOR PRESERVING COSMETICS, HOUSEHOLD AND TECHNICAL PRODUCTS**
ALKOHOLFREIES FLÜSSIG-KONZENTRAT ZUR KONSERVIERUNG VON KOSMETISCHEN, HAUSHALTS- UND TECHNISCHEN PRODUKTEN
CONCENTRE LIQUIDE SANS ALCOOL DESTINE A CONSERVER DES PRODUITS COSMETIQUES, MENAGERS ET TECHNIQUES

(30) Priority: 09.05.2001 DE 10122380
(43) Date of publication of application: 25.02.2004
(73) Proprietor: Air Liquide Santé (International), 75341 Paris Cedex 07 (FR); SCHÜLKE & MAYR GMBH, 22851 Norderstedt (DE)
(72) Inventor: BEILFUSS, Wolfgang, 22339 Hamburg (DE); HAHN, Gisela, 25486 Alveslohe (DE); HOOP, Kerstin, 25421 Pinneberg (DE); GRADTKE, Ralf, 25436 Tornesch (DE); WEBER, Klaus, 20149 Hamburg (DE)
(74) Representative: Conan, Philippe Claude
(86) International application number: PCT/IB2002/001477
(87) International publication number: WO 2002/089759

(56) References cited:
- EP-A- 1 055 408
- WO-A-01/85896
- WO-A-99/57235
- DE-A- 19 504 999
- DE-C- 3 933 964
- US-A- 2 866 817

## Description

The invention relates to an alcohol-free liquid concentrate based on carboxylic acid salts and stabilizer components, and to its use for preserving cosmetic, household and technical products.

Preservatives are used in many products or systems with an aqueous phase in order to avoid harmful and deterioration influences, in particular microbial influences, on the product. Important fields of use of preservatives are cosmetic products, such as shampoos, shower preparations and bath gels, but also high-value care cosmetics, such as creams, emulsions, lotions and gels. Preservatives are also used in household cleaning, care and hygiene products (e.g. antimicrobial hand cleansers) and body care (e.g. toothpaste), and in many technical fields (e.g. coating compositions, adhesives).

Cosmetic products, in particular "rinse-off" products, such as shampoos, the pH of which generally does not exceed 5-6, are increasingly preserved with organic acids or salts thereof, optionally in combination with alcohols and/or other preservatives (e.g. ethylparaben). In the industrial preparation of "rinse-off" products, use is frequently made of the single substances, which are matched individually to the products. Liquid preparations (liquid concentrates) are preferred since they offer advantages with regard to handling.

DE-A-199 22 538 discloses a liquid concentrate for preserving cosmetic products which comprises a combination of certain carboxylic acid salts and alcohols in a solvent. The alcohol component contributes to the effectiveness of the preservative in the final product, but is also necessary for the self-preservation of the preservative, which could otherwise be contaminated in the aqueous-alkaline medium by microorganisms.

DE-A-40 26 756 discloses a preservative for products or systems with an aqueous phase, in particular for cosmetic products for "rinse-off" and "leave-on" applications (e.g. shampoos, creams, lotions), products in the field of laundry detergents and cleaners, and also formulations for topical uses from the pharmaceutical sector. These preservatives comprise carboxylic acids or salts thereof, alcohols and poly(hexamethylene biguanide) salts, where the alcohol component is chosen from 2-phenoxyethanol, benzyl alcohol, phenethyl alcohol, 1-phenoxypropan-2-ol, 3-(4-chlorophenoxy)-1,2-propanediol, chlorobutanol or 2,4-dichlorobenzyl alcohol.
WO 01/85896, published on 15.11.01 discloses the combination of sodium benzoate and water; the combination of sodium formiate and water and the combination of sodium citrate and water EP 1 055 408, discloses a shampoo, which contains the combination of potassium sorbate, citric acid and water;
DE 19504999 discloses a conservative combination of potassium sorbate, citric acid and water.
WO 99/57235 discloses a cosmetic formulation which contains the combination of sodium benzoate and citric acid and;
DE 39 33 964 discloses a water solution of citric acid, sodium hydroxide, formic acid, sodium benzoate potassium sorbate, a mixture of vitamins and amino acids and xanthan.
Under the trade name Euxyl^{®} K 700, the applicant is currently marketing a preservative for cosmetics which is a stabilized aqueous preparation based on potassium sorbate and alcohols and can be used in cosmetic formulations with a skin-friendly pH up to 5.5.

However, in certain application cases, it is desirable to avoid the use of alcohol. For example, lower alcohols, such as ethanol or propanols have the disadvantage that they only have an antimicrobial action at comparatively high use concentrations and, in addition, are volatile. Aromatic alcohols used hitherto (e.g. phenoxyethanol, benzyl alcohol, phenoxypropanol, 2-phenylethanol, etc.) often have an intensive odour and are volatile, sensitive to oxidation and only soluble in water to a limited degree. A particularly oxidation-sensitive aromatic alcohol is, for example, benzyl alcohol, which forms benzaldehyde with its characteristic bitter almond odour. Furthermore, these aromatic alcohols can be resorbed through the skin; although they are degraded within the body, the absorption of non physiological substances through the skin is generally undesired. The above described properties of alcohols used hitherto are particularly problematical in products intended to be suitable for sensitive skin, babies and allergy sufferers, or come into contact with mucous membranes. Furthermore, low-VOC (volatile organic compound) or VOC-free products are increasingly in demand.

Preservatives based on carboxylic acid salts in which the use of alcohols is dispensed with are also known.

These are, for example, the liquid preservatives currently marketed under the trade names Rokonsal B liquid, Rokonsal BJ and Rokonsal BS. However, these products have a brownish colour, which is undesired in the cosmetic sector. This is because the colour of the products is assuming an ever greater role. Demand is increasing for clear or pastel-coloured products which are additionally to have high colour stability.

Other examples of such preservatives are the pulverulent or granular preservatives currently marketed under the trade names CA 24 and CA 24-E, which are suitable for hydrous technical products. The pulverulent product CA 24 comprises an active ingredient combination of chloroacetamide and sodium benzoate, while CA 24-E is a variant of the abovementioned product modified by coating the powder with 2.5% of a glycol. However, powders and granules have the disadvantage that they have to be dissolved or at least dispersed prior to incorporation into water-based products. Moreover, powders and granules, just like liquid products, are subject to considerable colour change with increasing storage time. For example, aqueous solutions prepared from fresh potassium sorbate granules are significantly paler than solutions prepared from the stored granules.

The object of the present invention was therefore to provide a liquid concentrate with a high active ingredient content based on carboxylic acid components with the fewest possible auxiliaries (solvents), which has high microbiological and physical (including low-temperature and colour) stability, and additionally offers advantages with regard to handling and cost over known preservatives.

To achieve this object, an alcohol-free liquid concentrate for preserving cosmetic, household and technical products is proposed, which is characterized in that it consists of a carboxylic acid component (A), a stabilizer component (B), solvents (C) and optionally customary auxiliaries, additives and/or further active ingredients, where the carboxylic acid component (A) comprises at least one salt chosen from sodium benzoate and/or potassium sorbate,and the stabilizer (B) comprises at least on compound chosen from formaldehyde, bonded, oligomeric or polymeric forms of formaldehyde, dimethyloldimethylhydantoin (DMDMH), imidazolidinylurea, diazolidinylurea, hexetidine, 2-bromo-5-nitro-1,3-dioxane (Bronidox), 2-bromo-2-nitro-1,3-propanediol (Bronopol), 1,3,5,7-tetraazaadamantane (hexamethylenetetramine), 4,4-dimethyl-1,3-oxazolidine, benzyl alcohol hemiformal, 5-ethyl-1-aza-3,7-dioxabicyclo(3.3.0)octane, sodium hydroxymethylglycinate, 1-(3-chloroallyl-3,5,7-triaza-1-azonia-adamantane chloride or mixtures of two or more thereof, O-formals, N-formals, urea/formaldehyde adducts and glycoluril/formaldehyde adducts.

The proportions of the individual components in the liquid concentrate given below in % by weight refer to the weight of the total concentrate, unless stated otherwise.

Surprisingly, it is has been found that through the active ingredient combination of carboxylic acid salts and small amounts of stabilizer additives, a notable colour stability of the preparations is achieved and the use of alcohols can be dispensed with without the microbiological stability and low-temperature stability of the preparations being impaired.

The term "alcohol-free" is understood here as meaning that the liquid concentrate according to the invention is free from alcohols customary hitherto, such as 2-phenoxyethanol, benzyl alcohol, phenethyl alcohol, 1-phenoxypropan-2-ol, 3-(4-chlorophenoxy)-1,2-propanediol, chlorobutanol, 2,4-dichlorobenzyl alcohol or mixtures thereof.

In a preferred embodiment, the liquid concentrate is free from antimicrobially active alcohols chosen from C₁-C₆-alkyl alcohols (e.g. ethanol, n-propanol, isopropanol, hexanol), aromatic alcohols and aromatic glycol ethers having at least one hydroxyl group, the aromatic alcohols or aromatic glycol ethers having at least one hydroxyl group being liquid at room temperature.

The invention also provides for the use of the liquid concentrate according to the invention for the preparation of cosmetic products, household products and technical products.

The invention further provides for the use of the liquid concentrate according to the invention as a preservative for cosmetic products, household products and technical products.

The liquid concentrate according to the invention comprises the carboxylic acid component (A) in an amount of more than 10% by weight, preferably more than 20% by weight and in particular more than 40% by weight.

The liquid concentrate comprises the stabilizer component (B) in an amount of from 0.0001 to 80% by weight, preferably 0.001 to 60% by weight, more preferably 0.01 to 40% by weight and in particular 0.1 to 20% by weight, the amount of 0.5 to 5% by weight is most preferred.

The term "stabilizer component" comprises compounds which have a colour-stabilizing action and/or additionally an antimicrobial effectiveness and/or significantly improve further physicochemical or performance-related properties, in particular the storage stability and/or the low-temperature stability of the liquid concentrate.

In this connection, "colour-stabilizing effect" means that the concentrate, optionally diluted with solvent or in the product to be preserved, is not subject to any significant colour change (e.g. brown discoloration) during customary storage conditions. Such a colour change can, for example, be monitored using known test methods (e.g. determination of the Hazen colour number or Gardner colour number).

The term "storage stability" means that during customary storage conditions over a period of at least 4 weeks, preferably 3 months, sensorially perceptible precipitate or clouding do not arise in the concentrate. "Customary storage conditions" are to be understood as meaning; for example, storage at room temperatures of from 15 to 25°C in dry, ventilatable areas. However, even at temperatures which are significantly higher than customary storage temperatures, preferably higher than 40°C (e.g. 50°C), the liquid concentrate according to the invention has adequate storage stability over said period, which is particularly advantageous for its use in tropical areas.

The term "low-temperature stability" is here understood as meaning that at low storage temperatures (e.g. at -5°C), sensorially perceptible precipitate or clouding within the concentrate do not arise over a period of at least 3 days, preferably 2 weeks, in particular 4 weeks and most preferably 3 months. However, "low-temperature stability" can also mean that a perceptible precipitate may arise in the concentrate at said temperatures (e.g. -5°C), but that this dissolves again upon warming (e.g. to room temperature). An addition of the stabilizer component (B) according to the invention evidently simultaneously reduces the crystallization of the carboxylic acid salts in the preparation, particularly upon evaporation (e.g. at the pack opening) or upon supercooling. It is assumed that these stabilizer additives contribute to an improvement in the low-temperature stability of the liquid concentrate, particularly during transportation or storage at low temperatures. The concentrate preferably remains liquid and pumpable at e.g. -5°C.

In addition, the stabilizer component (B) according to the invention simultaneously serves as a preservative for the weakly alkaline, water-based salt concentrates which are not sufficiently antimicrobially effective on their own in this pH range. Without the addition of the stabilizer component (B) according to the invention, microbial growth occurs in border areas in the preparation (e.g. due to dilution effects as a result of the formation of condensed moisture or upon dilution with water).

The stabilizer component (B) comprises at least one compound chosen from formaldehyde, bonded, oligomeric or polymeric forms of formaldehyde and formaldehyde donor compounds (which are also referred to as formaldehyde releasers). Formaldehyde is suitably used in dissolved form (e.g. as an aqueous 30 to 55% strength by weight solution) for the preparation of the liquid concentrate according to the invention. It is known that formaldehyde is present for the greatest part in such solutions as hydrate (i.e. in bonded form) or as a mixture of oligo- and polyoxymethylene glycols (i.e. in oligomeric and/or polymeric form). Examples of oligomeric forms of formaldehyde are 1,3,5-trioxane (trioxymethylene, metaformaldehyde) or 1,3,5,7-tetroxocane (tetraoxane, tetraoxymethylene). Known as a polymeric form of formaldehyde is "paraformaldehyde", which arises during the evaporation or during prolonged storage of aqueous formaldehyde solutions and is cleaved back reversibly to the monomer by the introduction of heat or the action of acid.

Formaldehyde donor compounds are dimethyloldimethylhydantoin (also abbreviated below to "DMDMH", e.g. Glydant XL 1000), imidazolidinylurea, diazolidinylurea, hexetidine, 5-bromo-5-nitro-1,3-dioxane (Bronidox), 2-bromo-2-nitro-1,3-propanediol (Bronopol), 1,3,5,7-tetraazaadamantane (hexamethylenetetramine), 4,4-dimethyl-1,3-oxazolidine, benzyl alcohol hemiformal, 5-ethyl-1-aza-3,7-dioxadicyclo(3.3.0)octane, sodium hydroxymethylglycinate, 1-(3-chloroallyl-3,5,7-triaza-1-azonia-adamantane chloride or mixtures of two or more thereof.

For applications in the non-cosmetics sector, e.g. in household and technical products, further formaldehyde donor compounds are suitable. These are O-formals, N-formals, urea/formaldehyde adducts and/or glycoluril/formaldehyde adducts. O-formals are reaction products of formaldehyde or paraformaldehyde with alcohols or glycols. Of the O-formals, ethylene glycol bis-hemiformal, propylene glycol bis-hemiformal, benzyl alcohol hemiformal, butyl glycol hemiformal, butyl diglycol hemiformal or mixtures of two or more thereof. N-formals are reaction products of aldehydes with amines. Preferred N-formals are hexahydrotriazine and/or oxazolidines. Of the hexahydrotriazines, preference is given to 2,2',2"-(hexahydro-1,3,5-triazine-1,3,5-triyl)triethanol (e.g. Grotan BK) and/or 1,3,5-tris(β-hydroxypropyl)hexahydrotriazine (e.g.

Grotan WS). A preferred oxazolidine is 3,3'-methylenebis (5-methyloxazolidine) (e.g. GrotaMar 71 or Grotan OX).

The main active ingredient component of the liquid concentrate according to the invention, the carboxylic acid salts, is a type of "gentle" preservative active ingredient, i.e. it is sufficiently antimicrobially effective at a comparatively high use concentration. Surprisingly, it has been found that said stabilizer additives have a multifunctional effect even in low concentrations, in that they exert a positive influence on the colour stability of the preparations and simultaneously serve to improve the effectiveness and/or to broaden the activity spectrum compared with preservative concentrates prepared only with the addition of carboxylic acid salts. Selected stabilizer components according to the invention also have a sufficiently good and desirable antimicrobial vapour phase action, which contributes to ensuring preservation and, as a result, a broad activity spectrum is achieved. These are, in particular, formaldehyde, bonded, oligomeric or polymeric forms of formaldehyde, and formaldehyde donor compounds, which, compared with antimicrobially effective alcohols, have a significantly higher vapour phase action for the same active ingredient concentration.

In the case of the use of some of these stabilizers having only a weakly defined antimicrobial action in the alkaline medium, it is necessary in some instances to combine said stabilizers with another suitable, more effective preservative.

Preferred antimicrobial active ingredients which can be used to improve the effectiveness and/or to broaden the activity spectrum are o-phenylphenol and salts thereof, zinc pyrithione, inorganic sulphites and bisulphites, sodium iodate, esters of 4-hydroxybenzoic acid, dibromohexamidine and salts thereof, triclocarban, 4-chloro-m-cresol, triclosan, 4-chloro-3,5-dimethylphenol, 2-hydroxy-4,4'-dichlorophenyl ether (e.g. Tinosan HP 100), polyhexamethylene diguanide and salts thereof, 1-(4-chlorophenoxy)-1-(imidazol-1-yl)-3,3-dimethyl-2-butanone, 1-hydroxy-4-methyl-6-(2,4,4-trimethylpentyl)-2-pyridone and monoethanolamine salts thereof, 1,2-dibromo-2,4-dicyanobutane, bromo-chlorophene, 5-chloro-2-methyl-3(2H)-isothiazolone, 2-methyl-3(2H)-isothiazolone, 2-benzyl-4-chlorophenol, 2-chloroacetamide, chlorhexidine and salts thereof, N-alkyl (C₁₂-C₂₂) trimethylammonium salts, hexamidine and salts thereof, glutardialdehyde, silver chloride, benzethonium chloride, benzalkonium salts (e.g. benzalkonium chloride), 3-iodo-2-propynylbutyl carbamate or mixtures of the aforementioned compounds.

In addition, a large number of substances or combination of substances can be used as further additives, auxiliaries or active ingredients (cosmetic additives) for the basic formulation (instead of the acids given below, the corresponding salts may be used). The additives can be anion-active or cation-active. Exemplary additives are skin care substances and moisture-retention agents (e.g. urea or Sensiva SC 50), complexing agents (e.g. EDTA), essential oils and natural extracts, amphoteric surfactants, surfactants, cleaning additives and disinfectant active ingredients (e.g. cocoamidopropylbetain), perfumes, antiacne or antidandruff active ingredients (e.g. octopirox and Lipacide C8G), fungicides, dyes, corrosion inhibitors, disinfectant active ingredients and antiseptics (e.g. octenidine dihydrochloride), bitter substances (e.g. denatonium salts), light protection agents (e.g. 2-phenylbenzimidazolsulphonic acid), deodorant active ingredients (e.g. zinc phenolsulphonate or Sensiva SC 50), oral care active ingredients (e.g. potassium monofluorophosphate), isothiazolones, carbohydrate compounds (e.g. alkyl polyglycosides, starch and cellulose derivatives and cyclodextrins), alkali metal chlorides (e.g. NaCl or KC1), anionic surfactants (e.g. lauryl ether sulphates), plant extracts and oils. Possible cation-active ingredients which may be used are quaternary ammonium salts (e.g. cetyltrimethylammonium chloride or bromide, cetylpyridinium chloride or didecyldimethyl-ammonium chloride).

Many of these cosmetics additives also have a multifunctional action. Furthermore, synergistic increases in activity of the liquid concentrates according to the invention containing the additives may sometimes arise.

Further additives, auxiliaries and/or active ingredients for uses in the household products and technical products sector are, for example, thickeners, buffers, antifoams, solubility promoters, antistats, polymers and/or antioxidants.

In individual cases, the type and amount of further active ingredients can be determined by the person skilled in the art in a simple and quick manner by a few experiments, it being possible for the active ingredient system obtained, which comprises the liquid concentrate according to the invention, to have a broad or also very specific use potential.

The preferred solvent (C) is water.

Preference is given to preparing liquid concentrates with a high active ingredient proportion and a comparatively low solvent proportion. Preferably, the liquid concentrate according to the invention consists, of 20 to 60% by weight of carboxylic acid component (A), 0.1 to 20% by weight of stabilizer component (B), 20 to 79.9% by weight of solvent (C) and optionally 0.1 to 20% by weight of additives, auxiliaries and/or further active ingredients. For example, the total proportion of the carboxylic acid component (A) and of the stabilizer component (B) is 20.1% by weight or above or, in particular, 40% by weight or above. Accordingly, the solvent proportion is 79.9% by weight or lower, or 60% by weight or lower, respectively.

A particularly preferred liquid concentrate comprises 25 to 35% by weight of sodium benzoate, 10 to 20% by weight of potassium sorbate, 0.5 to 5% by weight of stabilizer component (B) and 40 to 64.5% by weight of water, the stabilizer component (B) comprising at least one compound chosen from formaldehyde, bonded, oligomeric or polymeric forms of formaldehyde and formaldehyde donor compounds.

Even more preferred are liquid concentrates which comprise the following components in the given amounts:
- 29.00% by weight of sodium benzoate, 14.50% by weight of potassium sorbate, 3.33% by weight of aqueous formaldehyde solution (30% strength by weight) and 53.17% by weight of water;
- 29.70% by weight of sodium benzoate, 14.85% by weight of potassium sorbate, 1.00% by weight of Glydant XL 1000 (DMDMH) and 54.45% by weight of water;

An outstanding advantage of the liquid concentrate according to the invention is that it is possible to dispense with the use of antimicrobially effective alcohols which are liquid at room temperature (e.g. ethanol, isopropanol, 2-phenoxyethanol, benzyl alcohol, etc.), without impairing the microbial effectiveness and low-temperature stability of the preparations compared with known products based on carboxylic acid salts and alcohols (e.g. Euxyl K 700). Thus, liquid preservatives are available for fields of application where it is desired to work with alcohol-free products.

Surprisingly, it was possible to achieve a notable colour stability of the preparations at the same time as a result of the addition of small amounts of the non-alcoholic stabilizer component (B) according to the invention. Moreover, the addition of the stabilizer component (B) according to the invention to the carboxylic acid salt solution serves for the microbial stabilization of the aqueous preparation (self-preservation at a low concentration of the preservative) and for increasing the activity upon use in the cosmetic preparation to be preserved. Preparations according to the invention increase the germ-killing and germ-suppressing action in the border region of the effectiveness of the carboxylic acids within the cosmetic end product (e.g. pH range from 5.5 to 7.5).

The concentrates are prepared by simple mixing. For example, the salts are dissolved in water with stirring and the other additives (e.g. stabilizer component) are stirred in until homogeneous. Where appropriate, the mixture is warmed slightly (e.g. up to 50°C).

It is advantageous that the liquid concentrates according to the invention can, because of their solubility in water, be incorporated into the cosmetic, household or technical products by simple dilution. This offers handling and cost advantages compared with the use of individual substances, which are often powders or granules (e.g. sodium benzoate or potassium sorbate) and have to be dissolved or dispersed prior to incorporation into the product to be preserved. As a result of the high active ingredient proportion in the concentrate, it is also possible to reduce storage and transportation costs.

A further advantage consists in the liquid concentrates according to the invention being suitable as solubility promoters for cosmetic additives, which have low or limited solubility in water, or as solvents or carriers for diverse cosmetic additives.

A liquid concentrate according to the invention is preferably in the form of a clear homogeneous solution. Should any precipitate arise at a low pH in the concentrate or in preliminary dilutions, they can be reversibly dissolved by simple dilution or by correcting the pH. It is, however, also possible to prepare the liquid concentrate as a homogeneous-disperse preparation, it being preferable in such cases to avoid relatively large amounts of crystallized-out active ingredients in the preparation. The liquid concentrate may also be in the form of a paste.

The combination of acid-based and non-acid-based preservatives of the present invention, offer advantages for the preserving of cosmetic, household and technical products. It is known that the pH of e.g. cosmetic preparations (e.g. "rinse-off" products) in most cases decreases following storage. The use of the acid-based preservatives is therefore advantageous since their action comes more to the fore with increasing storage time, whereas the non-acid-based preservatives provide for reliable preservation during preparation and in the first part of the storage period.

The liquid concentrates according to the invention have a low residue risk upon use and are sufficiently safe.

The liquid concentrates according to the invention therefore have, in particular, the following advantages:
- liquid;
- high active ingredient content, comparatively low solvent content;
- handling and cost advantages (e.g. compared with alcohol-containing formulations by omitting the alcohol);
- very good colour stability;
- broad spectrum of activity;
- improved antimicrobial effectiveness in the critical pH range above pH 5 to pH 6 compared with known formulations comprising alcohol (in the case of the use of antimicrobially effective stabilizers);
- soluble in water (in the end products and in predilutions);
- during the production of cosmetics, can serve as solvents, solubility promoters or carriers for other ingredients (e.g. perfume, etc.);
- safe - low residue risk upon use;
- stable at low temperatures, liquid and pumpable at low temperatures (even at e.g. -5°C);
- miscible, compatible with a wide range of ingredients, and
- use of stabilizers having multifunctional properties (antimicrobially effective, colour stabilizer, low-temperature stabilizer, possibly vapour phase effectiveness, etc.).

The liquid concentrates according to the invention are suitable for the preparation of cosmetic products, in particular for "rinse-off" products, such as shampoos, the pH of which is usually less than 7, in particular less than 6.

Furthermore, the liquid concentrates according to the invention are suitable as additive with microbicidal and disinfecting properties in household products, particularly in the field of washing, cleaning, care and hygiene products (e.g. rinse agents, laundry fabric softeners, antimicrobial hand cleansers and moist wipes), and in products for body care (e.g. toothpastes, mouth rinses). As well as the preservation of the mostly water-based end products, the concentrates according to the invention contribute to the antimicrobial effectiveness.

The concentrates according to the invention are also suitable as preservatives for the technical sector, e.g. for preserving plastics dispersions, adhesives, washing emulsions, coatings and washing-active cleaners and care compositions.

The invention is illustrated in more detail by reference to the examples below. Unless stated otherwise, all percentages are based on the weight.

### Examples

### Example 1

Alcohol-free liquid concentrates according to the invention were prepared which comprised potassium sorbate, sodium benzoate, demin (demineralized) water, in each case varying stabilizer components (B) according to the invention and, where appropriate, potassium hydroxide solution (45% strength by weight).

Firstly, a basic preparation was prepared which had the following composition:

**Table I: Composition of the base preparation F (without alcohol)**

| **Constituent** | **Initial weight in g** | **% by wt.** |
|---|---|---|
| Potassium sorbate | 255.00 | 15.00 |
| Sodium benzoate | 510.00 | 30.00 |
| Demin. water | 935.00 | 55.00 |
| | 1700.00 | 100.00 |

To prepare the base preparation, demineralized water was initially introduced and carboxylic acid salts were added with stirring, a clear solution being obtained after further stirring.

Using the base preparation F, various concentrates (see Table II, preparations C to E) were prepared which comprised (100 - x) % by weight of the base preparation and x % by weight of stabilizer component according to the invention ("formaldehyde, 30%" are the corresponding aqueous solutions of these compounds).

To prepare the liquid concentrates according to the invention, a certain amount of the base preparation was weighed out, the corresponding amount of stabilizer component or potassium hydroxide solution (45% strength by weight) was added and the mixture was stirred until homogeneous. Clear solutions were obtained here.

The liquid concentrates C to E according to the invention, and, as comparison, the base preparation F, were then tested with regard to their storage stability, low-temperature stability and colour stability.

The results of these investigations are summarized in Table II, the percentages being percentages by weight and based on the weight of the total concentrate.

**Table II: Composition and storage stability, low-temperature stability and colour stability of liquid concentrates according to the invention**

| Liquid concentrate (constituents) | | | C | D | E | F |
|---|---|---|---|---|---|---|
| Potassium formate, Aldrich | | | 1.00% | | | |
| Formaldehyde, 30% | | | | 3.33% | | |
| Glydant XL 1000, Lonza | | | | | 1.00% | |
| Base preparation | | | 99.00% | 96.67% | 99.00% | 100.00% |
| Appearance (freshly prepared preparation) | | | clear, yellowish solution | clear, yellowish solution | clear, yellowish solution | clear, yellowish solution |
| Hazen colour number (freshly prepared preparation) | | | 58 | 53 | 59 | 60 |
| Appearance after 6 weeks 25°C | | | clear, yellowish solution | clear, yellowish solution | clear, yellowish solution | clear, yellowish solution |
| Hazen colour number after 6 weeks | | | 88 | 30 | 40 | 103 |
| Appearance after 6 months -5°C | No precipitate in any of the samples, no change in terms of colour. | | | | | |
| Appearance after 6 months 25°C | | | clear, yellowish solution | clear, yellowish solution | clear, yellowish solution | clear, yellowish solution |
| Hazen colour number after 6 months | | | 694 | 24 | 40 | 777 |
| Appearance after 1 year -5°C | No precipitate in any of the samples, all solutions yellowish to yellow. | | | | | |
| Appearance after 1 year 25°C | | | slight hazing at the bottom of an orange solution | slight hazing at the bottom of a yellowish solution | slight hazing at the bottom of a yellowish solution | slight hazing at the bottom of a yellowish solution |
| Hazen or Gardner colour number after 1 year | | | -/6.3 | 29/0.1 | 77/0.3 | -/6.6 |

Table II shows that the preparations C to E are still as clear after 6 weeks at a temperature of 25°C and thus have high storage stability. Even at -5°C, no precipitate appeared in the preparations even after a storage time of 6 months to 1 year. This shows that the liquid concentrate had sufficient low-temperature stability.

For the colour stability investigations, the liquid concentrates were stored at 25°C in clear glass, and the Hazen or Gardner colour number (see test methods) was determined directly following the preparation of a freshly prepared preparation, and also after 6 weeks, 6 months and 1 year. These measurements of colour stability values as a function of the storage time, which are summarized in Table II, show that by adding the stabilizer component according to the invention, the Hazen or Gardner colour number was considerably reduced and a high colour stability was achieved relative to the base preparation F (without the stabilizer component). A particularly high colour stability was found when the concentrate comprised, as stabilizer component, aqueous formaldehyde solution (30% strength by weight) in an amount of 3.33% by weight or dimethyloldimethylhydantoin (DMDMH) (as Glydant XL 1000) in an amount of 1.00% by weight (in each case based on the weight of the total concentrate), since, after a storage time of 6 weeks and 6 months, it was even possible to observe a decrease in the Hazen colour number, compared with the freshly prepared concentrate in each case.

### Example 2 (comparative experiments)

For comparison, liquid concentrates were prepared which, in addition to the components of the alcohol-free liquid concentrates according to the invention (cf. Example 1), comprised phenoxyethanol. For this, a further base preparation F1 was prepared in which, compared with base preparation F from Example 1, a certain proportion of the demin. water was replaced by phenoxyethanol (see Table III). This base preparation was prepared similarly to that in Example 1, by initially introducing demin. water and phenoxyethanol.

**Table III: Composition of the base preparation F1 (comprising phenoxyethanol)**

| **Constituent** | **Initial weight in g** | **% by wt.** |
|---|---|---|
| Potassium sorbate | 255.00 | 15.00 |
| Sodium benzoate | 510.00 | 30.00 |
| Demin. Water | 850.00 | 50.00 |
| Phenoxyethanol | 85.00 | 5.00 |
| | 1700.00 | 100.00 |

Using the base preparation F1, liquid concentrates were prepared - as already described in Example 1 - (see Table IV, preparations C1 to E1), by using the base preparation F1, the stabilizer additives and optionally potassium hydroxide solution (45% strength by weight) in the same amount. The alcohol-containing liquid concentrates C1 to E1 and, as comparison, the base preparation F1, were then tested with regard to their storage stability, low-temperature stability and colour stability. The results of these investigations are summarized in Table IV (the percentages are percentages by weight and are based on the weight of the total concentrate). It is found that by adding phenoxyethanol, either comparable or even poorer colour stability values were observed compared with the alcohol-free liquid concentrates in Example 1. Neither were the phenoxyethanol-comprising preparations superior with regard to storage stability and low-temperature stability. This illustrates that the addition of hitherto customary antimicrobially effective alcohols (e.g. phenoxyethanol) are not absolutely necessary in order to achieve good storage, low-temperature and colour stabilities. This permits the use of the liquid concentrates according to the invention in e.g. cosmetic products, where the presence of alcohol is often undesired and the colour stability is an important quality parameter.

**Table IV: Composition and storage, low-temperature and colour stability of phenoxyethanol-containing liquid concentrates**

| Liquid concentrate (constituents) | | | C1 | D1 | E1 | F1 |
|---|---|---|---|---|---|---|
| Potassium formate, Aldrich | | | 1.00% | | | |
| Formaldehyde, 30% | | | | 3.33% | | |
| Glydant XL 1000, Lonza | | | | | 1.00% | |
| Base preparation | | | 99.00% | 96.67% | 99.00% | 100.00% |
| Appearance (freshly prepared preparation) | | | clear, yellowish solution | clear, yellowish solution | clear, yellowish solution | clear, yellowish solution |
| Hazen colour number (freshly prepared preparation) | | | 60 | 53 | 60 | 60 |
| Appearance after 6 weeks 25°C | | | clear, yellowish solution | clear, yellowish solution | clear, yellowish solution | clear, yellow solution |
| Hazen colour number after 6 weeks | | | 92/0.3 | 31/0.0 | 38/0.1 | 94/0.4 |
| Appearance after 6 months -5°C | No precipitate in any of the samples, no change in terms of colour. | | | | | |
| Appearance after 6 months 25°C | | | clear, orange-yellow solution | clear, yellowish solution | clear, yellowish solution | clear, yellow solution |
| Hazen or Gardner colour number after 6 months | | | 872/4.7 | 23/0.0 | 42/0.1 | 383/2.8 |
| Appearance after 1 year -5°C | No precipitate in any of the samples, all solutions yellowish to yellow. | | | | | |
| Appearance after 1 year 25°C | | | clear, orange-red solution | clear, yellowish solution | clear, yellowish solution | clear, yellowish solution |
| Hazen or Gardner colour number after 1 year | | | -/6.8 | 27/0.0 | 79/0.3 | 984/5.1 |

### Test methods

The Hazen colour number (DIN-ISO 6271, also known as "APHA method" or "platinum/cobalt scale") is defined as mg of platinum per 1 litre of solution. For the Hazen stock solution, 1.246 g of potassium hexachloroplatinate(IV) and 1.00 g of cobalt(II) chloride are dissolved in 100 ml of hydrochloric acid and made up to 1 000 ml with distilled water. The Hazen colour scale is used for assessing the colour of products which are approximately water-clear. It is graduated more narrowly in the pale yellowish region than the iodine colour scale and extends to water-clear shades.

The Gardner colour number is defined in DIN-ISO 4630. The pale yellow Gardner colour numbers (1 to 8) are based on potassium chloroplatinate solutions, and colour numbers 9 to 18 are based on iron(III) chloride, cobalt(II) chloride and hydrochloric acid solutions.

The concentrate in each case was introduced into a cell and then the colour number was measured using a LICO^{®} 200 type colorimeter (Dr Lange GmbH, Berlin):

## Claims

1. Alcohol-free liquid concentrate for preserving cosmetic products, household products and technical products, **characterized in that** it consists of a carboxylic acid component (A), a stabilizer component (B), solvents (C) and optionally customary auxiliaries, additives and/or further active ingredients, where the carboxylic acid component (A) comprises sodium benzoate and/or potassium sorbate and the stabilizer (B) comprises at least on compound chosen from formaldehyde, bonded, oligomeric or polymeric forms of formaldehyde, dimethyloldimethylhydantoin (DMDMH), imidazolidinylurea, diazolidinylurea, hexetidine, 2-bromo-5-nitro-1,3-dioxane (Bronidox), 2-bromo-2-nitro-1,3-propanediol (Bronopol), 1,3,5,7-tetraazaadamantane (hexamethylenetetramine), 4,4-dimethyl-1,3-oxazolidine, benzyl alcohol hemiformal, 5-ethyl-1-aza-3,7-dioxabicyclo(3.3.0)octane, sodium hydroxymethylglycinate, 1-(3-chloroallyl-3,5,7-triaza-1-azonia-adamantane chloride or mixtures of two or more thereof, O-formals, N-formals, urea/formaldehyde adducts and glycoluril/formaldehyde adducts,

2. Liquid concentrate according to Claim 1, **characterized in that** it comprises the carboxylic acid component (A) in an amount of more than 40% by weight (based on the weight of the total concentrate).

3. Liquid concentrate according to Claim 1 or 2, **characterized in that** it comprises the stabilizer component (B) in an amount of from 0.0001 to 80% by weight, preferably 0.001 to 60% by weight, more preferably 0.01 to 40% by weight, particularly 0.1 to 20% by weight and most preferably 0.5 to 5% by weight (based on the weight of the total concentrate).

4. Liquid concentrate according to one of Claims 1, 2 or 3, **characterized in that** it consists of 20 to 60% by weight of the carboxylic acid component (A), 0.1 to 20% by weight of the stabilizer component (B), 20 to 79.9% by weight of solvent (C) and optionally 0.1 to 20% by weight of additives, auxiliaries and/or further active ingredients (in each case based on the weight of the total concentrate).

5. Liquid concentrate according to one of Claims 1 to 4, **characterized in that** the solvent (C) is water.

6. Liquid concentrate according to one of Claims 1 to 9, **characterized in that** it comprises 20 to 35% by weight of sodium benzoate, 10 to 20% by weight of potassium sorbate, 0.5 to 5% by weight of stabilizer component (B) and 40 to 64.5% by weight of water (in each case based on the weight of the total concentrate), where the stabilizer component (B) comprises at least one compound chosen from formaldehyde, bonded, oligomeric or polymeric forms of formaldehyde and dimethyloldimethylhydantoin (DMDMH), imidazolidinylurea, diazolidinylurea, hexetidine, 2-bromo-5-nitro-1,3-dioxane (Bronidox), 2-bromo-2-nitro-1,3-propanediol (Bronopol), 1,3,5,7-tetraazaadamantane (hexamethylenetetramine), 4,4-dimethyl-1,3-oxazolidine, benzyl alcohol hemiformal, 5-ethyl-1-aza-3,7-dioxabicyclo(3.3.0)octane, sodium hydroxymethylglycinate, 1-(3-chloroallyl-3,5,7-triaza-1-azonia-adamantane chloride or mixtures of two or more thereof.

7. Liquid concentrate according to Claim 10, **characterized in that** it comprises 29.00% by weight of sodium benzoate, 14.50% by weight of potassium sorbate, 3.33% by weight of aqueous formaldehyde solution (30% strength by weight) and 53.17% by weight of water (in each case based on the weight of the total concentrate).

8. Liquid concentrate according to Claim 6, **characterized in that** it comprises 29.70% by weight of sodium benzoate, 14.85% by weight of potassium sorbate, 1.00% by weight of dimethyloldimethylhydantoin (DMDMH) and 54.45% by weight of water (in each case based on the weight of the total concentrate).

9. Use of a liquid concentrate according to one of Claims 1 to 8 for the preparation of cosmetic products, household products and technical products.

10. Use of a liquid concentrate according to one of Claims 1 to 8, as preservative for cosmetic products, household products and technical products.

11. Use according to Claim 9 or 10, **characterized in that** the pH of the cosmetic products is less than 7, preferably less than 6.

12. Use according to one of Claims 9 to 11, **characterized in that** the cosmetic products are "rinse-off" products.

13. Use according to Claim 12, **characterized in that** the "rinse-off" products are shampoos.

## Patentansprüche

1. Alkoholfreies Flüssigkonzentrat zur Konservierung von kosmetischen Produkten, Haushaltsprodukten und technischen Produkten, **dadurch gekennzeichnet, daß** es aus einer Carbonsäurekomponente (A), einer Stabilisatorkomponente (B), Lösungsmitteln (C) und gegebenenfalls üblichen Hilfs-, Zusatz- und/oder weiteren Wirkstoffen besteht, wobei die Carbonsäurekomponente (A) Natriumbenzoat und/oder Kaliumbenzoat umfaßt und die Stabilisatorkomponente (B) mindestens eine aus Formaldehyd, gebundenen, oligomeren oder polymeren Formen des Formaldehyds, Dimethyloldimethylhydantoin (DMDMH), Imidazolidinylharnstoff, Diazolidinylharnstoff, Hexetidin, 2-Brom-5-nitro-1,3-dioxan (Bronidox), 2-Brom-2-nitro-1,3-propandiol (Bronopol), 1,3,5,7-Tetraazaadamantan (Hexamethylentetramin), 4,4-Dimethyl-1,3-oxazolidin, Benzylalkoholhemiformal, 5-Ethyl-1-aza-3,7-dioxabicyclo(3.3.0)-octan, Natriumhydroxymethylglycinat, 1-(3-Chlorallyl-3,5,7-triaza-1-azonia-adamantanchlorid oder Mischungen von zwei oder mehr derselben, O-Formalen, N-Formalen, Harnstoff-Formaldehyd-Addukten und Glycoluril-Formaldehyd-Addukten ausgewählte Verbindung umfaßt.

2. Flüssigkonzentrat nach Anspruch 1, **dadurch gekennzeichnet, daß** es die Carbonsäurekomponente (A) in einer Menge von mehr als 40 Gew.-% (bezogen auf das Gewicht des gesamten Konzentrats) enthält.

3. Flüssigkonzentrat nach Anspruch 1 oder 2, **dadurch gekennzeichnet, daß** es die Stabilisatorkomponente (B) in einer Menge von 0,0001 bis 80 Gew.-%, vorzugsweise 0,001 bis 60 Gew.-%, weiter bevorzugt 0,01 bis 40 Gew.-%, insbesondere 0,1 bis 20 Gew.-% und am meisten bevorzugt 0,5 bis 5 Gew.-% (bezogen auf das Gewicht des gesamten Konzentrats) enthält.

4. Flüssigkonzentrat nach einem der Ansprüche 1, 2 oder 3, **dadurch gekennzeichnet, daß** es aus 20 bis 60 Gew.-% der Carbonsäurekomponente (A), 0,1 bis 20 Gew.-% der Stabilisatorkomponente (B), 20 bis 79,9 Gew-% Lösungsmittel (C) und gegebenenfalls 0,1 bis 20 Gew.-% Zusatz-, Hilfs- und/oder weiteren Wirkstoffen besteht (jeweils bezogen auf das Gewicht des gesamten Konzentrats).

5. Flüssigkonzentrat nach einem der Ansprüche 1 bis 4, **dadurch gekennzeichnet, daß** das Lösungsmittel (C) Wasser ist.

6. Flüssigkonzentrat nach einem der Ansprüche 1 bis 9, **dadurch gekennzeichnet, daß** es 20 bis 35 Gew.-% Natriumbenzoat, 10 bis 20 Gew.-% Kaliumsorbat, 0,5 bis 5 Gew.-% Stabilisatorkomponente (B) und 40 bis 64,5 Gew.-% Wasser (jeweils bezogen auf das Gewicht des gesamten Konzentrats) umfaßt, wobei die Stabilisatorkomponente (B) mindestens eine aus Formaldehyd, gebundenen, oligomeren oder polymeren Formen des Formaldehyds, Dimethyloldimethylhydantoin (DMDMH), Imidazolidinylharnstoff, Diazolidinylharnstoff, Hexetidin, 2-Brom-5-nitro-1,3-dioxan (Bronidox), 2-Brom-2-nitro-1,3-propandiol (Bronopol), 1,3,5,7-Tetraazaadamantan (Hexamethylentetramin), 4,4-Dimethyl-1,3-oxazolidin, Benzylalkoholhemiformal, 5-Ethyl-1-aza-3,7-dioxa-bicyclo(3.3.0)-octan, Natriumhydroxymethylglycinat, 1-(3-Chlorallyl-3,5,7-triaza-1-azonia-adamantanchlorid oder Mischungen von zwei oder mehr derselben ausgewählte Verbindung umfaßt.

7. Flüssigkonzentrat nach Anspruch 10, **dadurch gekennzeichnet, daß** es 29,00 Gew.-% Natriumbenzoat, 14,50 Gew.-% Kaliumsorbat, 3,33 Gew.-% wäßrige Formaldehydlösung (30 gew.-%ig) und 53,17 Gew.-% Wasser (jeweils bezogen auf das Gewicht des gesamten Konzentrats) umfaßt.

8. Flüssigkonzentrat nach Anspruch 6, **dadurch gekennzeichnet, daß** es 29,70 Gew.-% Natriumbenzoat, 14,85 Gew.-% Kaliumsorbat, 1,00 Gew.-% Dimethyloldimethylhydantoin (DMDMH) und 54,45 Gew.-% Wasser (jeweils bezogen auf das Gewicht des gesamten Konzentrats) umfaßt.

9. Verwendung eines Flüssigkonzentrats gemäß einem der Ansprüche 1 bis 8 zur Herstellung von kosmetischen Produkten, Haushaltsprodukten und technischen Produkten.

10. Verwendung eines Flüssigkonzentrats gemäß einem der Ansprüche 1 bis 8 als Konservierungsmittel für kosmetische Produkte, Haushaltsprodukte und technische Produkte.

11. Verwendung nach Anspruch 9 oder 10, **dadurch gekennzeichnet, dass** der pH-Wert der kosmetischen Produkte geringer als 7 und vorzugsweise geringer als 6 ist.

12. Verwendung nach einem der Ansprüche 9 bis 11, **dadurch gekennzeichnet, daß** die kosmetischen Produkte "rinse-off"-Produkte sind.

13. Verwendung nach Anspruch 12, **dadurch gekennzeichnet, daß** die "rinse-off"-Produkte Shampoos sind.

## Revendications

1. Concentré liquide sans alcool pour conserver des produits cosmétiques, des produits ménagers et des produits techniques, **caractérisé en ce qu'**il est constitué d'un constituant acide carboxylique (A), d'un constituant stabilisant (B), de solvants (C) et éventuellement d'adjuvants, d'additifs et/ou d'autres ingrédients actifs ordinaires, où le constituant acide carboxylique (A) comprend du benzoate de sodium et/ou du sorbate de potassium et le stabilisant (B) comprend au moins un composé choisi parmi le formaldéhyde, les formes liées, oligomères ou polymères de formaldéhyde, la diméthyloldiméthylhydantoïne (DMDMH), l'imidazo-lidinylurée, la diazolidinylurée, l'hexétidine, le 2-bromo-5-nitro-1,3-dioxane (Bronidox), le 2-bromo-2-nitro-1,3-propanediol (Bronopol), le 1,3,5,7-tétraazaadamantane (hexaméthylènetétramine), la 4,4-diméthyl-1,3-oxazolidine, l'hémiformal d'alcool benzylique, le 5-éthyl-1-aza-3,7-dioxabicyclo(3.3.0)octane, l'hydroxy-méthylglycinate de sodium, le chlorure de 1-(3-chloro-allyl-3,5,7-triaza-1-azoniaadamantane ou des mélanges d'au moins deux d'entre eux, les O-formals, les N-formals, les adduits urée/formaldéhyde et les adduits glycolurile/formaldéhyde.

2. Concentré liquide selon la revendication 1, **caractérisé en ce qu'**il comprend le constituant acide carboxylique (A) en une quantité de plus de 40% en poids (par rapport au poids du concentré total).

3. Concentré liquide selon la revendication 1 ou 2, **caractérisé en ce qu'**il comprend le constituant stabilisant (B) en une quantité de 0,0001 à 80% en poids, de préférence 0,001 à 60% en poids, mieux encore de 0,01 à 40% en poids, en particulier de 0,1 à 20% en poids et tout particulièrement de 0,5 à 5% en poids (par rapport au poids du concentré total).

4. Concentré liquide selon l'une des revendications 1, 2 ou 3, **caractérisé en ce qu'**il est constitué de 20 à 60% en poids du constituant acide carboxylique (A), de 0,1 à 20% en poids du constituant stabilisant (B), de 20 à 79,9% en poids de solvant (C) et éventuellement de 0,1 à 20% en poids d'additifs, d'adjuvants et/ou d'autres ingrédients actifs (dans chaque cas par rapport au poids du concentré total).

5. Concentré liquide selon l'une des revendications 1 à 4, **caractérisé en ce que** le solvant (C) est de l'eau.

6. Concentré liquide selon l'une des revendications 1 à 9, **caractérisé en ce qu'**il comprend 20 à 35% en poids de benzoate de sodium, 10 à 20% en poids de sorbate de potassium, 0,5 à 5% en poids de constituant stabilisant (B) et 40 à 64,5% en poids d'eau (dans chaque cas par rapport au poids du concentré total), où le constituant stabilisant (B) comprend au moins un composé choisi parmi le formaldéhyde, les formes liées, oligomères ou polymères de formaldéhyde et la diméthyloldiméthylhydantoïne (DMDMH), l'imidazolidinylurée, la diazolidinylurée, l'hexétidine, le 2-bromo-5-nitro-1,3-dioxane (Bronidox), le 2-bromo-2-nitro-1,3-propanediol (Bronopol), le 1,3,5,7-tétraazaadamantane (hexaméthylènetétramine), la 4,4-diméthyl-1,3-oxazolidine, l'hémiformal d'alcool benzylique, le 5-éthyl-1-aza-3,7-dioxabicyclo(3.3.0)octane, l'hydroxyméthylglycinate de sodium, le chlorure de 1-(3-chloroallyl-3,5,7-triaza-1-azoniaadamantane ou des mélanges d'au moins deux d'entre eux.

7. Concentré liquide selon la revendication 10, **caractérisé en ce qu'**il comprend 29,00% en poids de benzoate de sodium, 14,50% en poids de sorbate de potassium, 3,33% en poids de solution aqueuse de formaldéhyde (concentration de 30% en poids) et 53,17% en poids d'eau (dans chaque cas par rapport au poids du concentré total).

8. Concentré liquide selon la revendication 6, **caractérisé en ce qu'**il comprend 29,70% en poids de benzoate de sodium, 14,85% en poids de sorbate de potassium, 1,00% en poids de diméthyloldiméthylhydantoïne (DMDMH) et 54,45% en poids d'eau (dans chaque cas par rapport au poids du concentré total).

9. Utilisation d'un concentré liquide selon l'une des revendications 1 à 8 pour la préparation de produits cosmétiques, de produits ménagers et de produits techniques.

10. Utilisation d'un concentré liquide selon l'une des revendications 1 à 8, comme conservateur pour des produits cosmétiques, des produits ménagers et des produits techniques.

11. Utilisation selon la revendication 9 ou 10, **caractérisée en ce que** le pH des produits cosmétiques est inférieur à 7, de préférence inférieur à 6.

12. Utilisation selon l'une des revendications 9 à 11, **caractérisée en ce que** les produits cosmétiques sont des produits "à rincer".

13. Utilisation selon la revendication 12, **caractérisée en ce que** les produits "à rincer" sont des shampooings.
